# EUROPÄISCHE PATENTANMELDUNG

(11) **EP 4 696 497 A1**
(43) Veröffentlichungstag der Anmeldung: **18.02.2026**
(21) Anmeldenummer: 24194549.2
(22) Anmeldetag: 14.08.2024
(51) Int. Cl.: B32B 7/12, B32B 21/14, C08G 18/12, C08G 18/22, C08G 18/38, C08G 18/48, C08G 18/66, C08G 18/76, C09J 175/00

(54) **DREIKOMPONENTIGE POLYURETHANZUSAMMENSETZUNG MIT DYNAMISCH EINSTELLBARER TOPFZEIT**

(71) Anmelder: Sika Technology AG, 6340 Baar (CH)
(72) Erfinder: ROTH, Semjon, 8048 Zürich (CH); CHOFFAT, Fabien, 8048 Zürich (CH); ILLI, Tobias, 8048 Zürich (CH)
(74) Vertreter: Sika Patent Attorneys

(57) **Zusammenfassung**

Die vorliegende Erfindung betrifft eine dreikomponentige Polyurethanzusammensetzung geeignet als Laminierklebstoff, bestehend aus drei bei der Anwendung zu mischenden Komponenten, wobei
die erste Komponente und die zweite Komponente jeweils mindestens ein Polyol mit einer OH-Funktionalität im Bereich von 1.5 bis 4 und einem mittleren Molekulargewicht (Zahlenmittel) Mₙ im Bereich von 250 bis 15'000 g/mol, sowie mindestens einen Metallkatalysator für die Reaktion von Hydroxylgruppen und Isocyanatgruppen, der Thiokomplexe bilden kann, sowie mindestens eine Verbindung, die mindestens eine Thiolgruppe aufweist, umfassen, wobei das molare Verhältnis aller Thiolgruppen der mindestens einen Verbindung zu allen Metallatomen des mindestens einen Metallkatalysators in der ersten Komponente und in der zweiten Komponente jeweils zwischen 1:1 und 250:1 liegt,
und die dritte Komponente mindestens ein Polyisocyanat umfasst, dadurch gekennzeichnet, dass
die erste Komponente mindestens die 1.5-fache Menge an Metallkatalysator enthält wie in der zweiten Komponente enthalten ist, bezogen auf die molare Menge an Metallatomen des Metallkatalysators in der jeweiligen Komponente.

Eine solche Zusammensetzung erlaubt die beliebige dynamische Einstellung der Topfzeit innerhalb bestimmter Grenzen während des Klebeprozesses und ermöglicht es, mehrschichtige Verklebungen mit unterschiedlich langer Topfzeit pro Klebeschicht und anschliessender sehr rascher Aushärtung der Zusammensetzung zu erreichen. Die erfindungsgemässe Zusammensetzung ist besonders geeignet als Laminierklebstoff für das Herstellen von Verbundmaterialien und kann bei jeder Umgebungstemperatur verwendet werden.

## Beschreibung

### Technisches Gebiet

Die Erfindung betrifft das Gebiet der dreikomponentigen Polyurethanzusammensetzungen geeignet als Laminierklebstoff, sowie ein Verfahren zum schichtweisen Verkleben von mindestens drei Substraten.

### Stand der Technik

Brettsperrholzplatten, auch als mehrschichtige Massivholzplatten oder crosslaminated timber (CLT) bezeichnet, sind ein immer mehr gefragter Rohstoff in Bau und Industrie. Sie werden üblicherweise durch das schichtweise Verkleben und Verpressen von dünnen Holzplatten hergestellt, meist als sogenannte Dreischichtplatten, und sind bezüglich mechanischer Eigenschaften, Formstabilität und Herstellungskosten Massivholzplatten derselben Dicke überlegen. Dabei kommen verschiedene Laminierklebstoffe zum Einsatz. Traditionell sind dies beispielsweise Melaminharze wie Melamin-Phenol-Formaldehyd-Harze (MPF) oder Melamin-Harnstoff-FormaldehydHarze (MUF), sowie einkomponentige oder zweikomponentige Polyurethanklebstoffe. Die Melaminharze haben den grossen Nachteil, dass sie Formaldehyd enthalten, was toxikologisch höchst problematisch ist, besonders für Anwendungen im Wohnbereich. Einkomponentige Polyurethanzusammensetzungen benötigen im Gegensatz dazu sehr lange Presszeiten und sind daher für industrielle Anwendungen nicht bevorzugt. Zweikomponentige Polyurethanzusammensetzungen auf Basis von Polyolen und Polyisocyanaten werden bereits seit langem eingesetzt. Zweikomponentige Polyurethanzusammensetzungen haben gegenüber einkomponentigen, feuchtigkeitshärtenden Polyurethanzusammensetzungen den Vorteil, dass sie nach dem Mischen schnell aushärten und deshalb bereits nach kurzer Zeit höhere Kräfte aufnehmen und übertragen können.

Für den Einsatz als Laminierklebstoffe, zur Herstellung von beispielsweise Schichtholzplatten, werden hohe Ansprüche in Bezug auf Festigkeit und Anhaftungskräfte an solche Zusammensetzungen gestellt, da derartige Klebstoffe für die Herstellung von Verbundelementen, z.B. Sandwichelementen, eingesetzt werden und verschiedene Substrate grossflächig und dauerhaft adhäsiv zusammenhalten müssen. Insbesondere benötigen solche Zusammensetzungen im ausgehärteten Zustand gute mechanische Eigenschaften wie ausreichende Zugfestigkeit bei geeigneten E-Moduln, um die Stabilität der Verbundmaterialien auch unter thermischem oder mechanischem Stress gewährleisten zu können. Dies ist insbesondere eine Herausforderung bei Substraten mit unterschiedlichen Wärmeausdehnungskoeffizienten. Ausserdem muss die Adhäsionsleistung des Klebstoffs über die Lebensdauer des Verbundelements dauerhaft beständig sein. Weiterhin ist es, z.B. in der industriellen Fertigung wünschenswert, dass solche Klebstoffe eine genügend lange Topfzeit für die benötigte grossflächige Auftragung bei der Herstellung von Verbundelementen aufweisen, aber danach möglichst schnell aushärten, was die Taktzeiten verringert. Die Topf- und Aushärtungszeiten sollten zudem möglichst auf den gewünschten Fertigungsprozess einstellbar sein, um eine effiziente, automatisierte Applikation zu ermöglichen.

Um die gewünschten mechanischen Eigenschaften und vor allem eine besonders schnelle Aushärtung zu erreichen, sind in solchen Zusammensetzungen hohe Anteile an Isocyanaten vorteilhaft, die in einer der beiden Komponenten in Form von freien oder an Polymere gebundenen Polyisocanaten vorliegen und nach Mischen mit der anderen Komponente, die Polyole enthält, unter Bildung eines polymeren Netzwerks aushärten. Ein hoher Gehalt an Isocyanaten führt jedoch zu Problemen. Insbesondere bei Verwendung von Vernetzungskatalysatoren, was für eine selektive, optimale Vernetzung und Aushärtung unerlässlich ist, werden solche zweikomponentigen Systeme fast unkontrollierbar schnell und die Topfzeiten viel zu kurz für eine Anwendung als Laminierklebstoff. Weiterhin besteht das Problem, dass mit den Laminierklebstoffen mehrere Schichten von Substraten zum Verbundwerkstoff verklebt werden sollen, wobei nach Abschluss des mehrschichtigen Verklebungsvorgangs das Laminat verpresst wird. Die Verpressung muss dabei innerhalb der Topfzeit aller applizierter Klebstoffschichten stattfinden, damit am Ende ein sauber verklebtes Verbundelement erhalten wird. Bei zweikomponentigen Polyurethanzusammensetzungen ist die Topfzeit konstant und muss bei einer mehrschichtigen Verklebung lange genug eingestellt werden, damit alle Schichten aufgetragen und innerhalb der Topfzeit der ersten Klebstoffschicht die Verpressung durchgeführt werden kann. Die Presszeit muss jedoch üblicherweise mindestens dieselbe Dauer wie die Topfzeit aufweisen, was bei einer konstanten Topfzeit über alle Klebeschichten zu unerwünscht langen Presszeiten führt, da die Topfzeit der zuletzt aufgetragenen Klebstoffschicht die Länge der Presszeit definiert.

Um diesem Problem zu begegnen, wurden dreikomponentige Polyurethanzusammensetzungen entwickelt, welche sich insbesondere für mehrschichtige Laminierverklebungen eignen.

Ein Beispiel eines solchen Verfahrens ist in WO 2018/134476 A1 offenbart. Diese Schrift offenbart ein Klebeverfahren für mehrschichtige Verklebung, wobei zwei verschiedene Leimkomponenten mit unterschiedlicher Topfzeit und eine Härterkomponente zum Einsatz kommen. Durch eine computergesteuerte Dosierung der drei Komponenten kann, über das Mischverhältnis der beiden Leimkomponenten, für jede Klebstoffschicht eine andere Topfzeit eingestellt werden, was den gesamten Laminiervorgang beschleunigt. Diese Publikation gibt jedoch keine Details über die chemische Zusammensetzung der Leim- und Härterkomponenten preis, ausser, dass sie auf Polyurethanbasis hergestellt werden können. Es sind jedoch nicht alle Polyurethanklebstoffe problemlos für ein solches Verfahren geeignet. Ein wesentliches Problem, das speziell bei industriellen Laminierprozessen auftritt, ist die hohe Empfindlichkeit gängiger Polyurethanklebstoffe gegenüber Feuchtigkeit, im Speziellen der relativen Luftfeuchte. Dies ist insbesondere ein Problem, da in der industriellen Lamination die Klebstoffe in sehr dünnen (beispielsweise 100 µm bis 1 mm), aber grossflächigen (bis mehrere m²) Schichten aufgetragen werden und damit eine grosse Grenzfläche zur Umgebungsluft resultiert. Bei relativen Luftfeuchten über 50% treten bei den grossflächigen, dünnschichten Laminierapplikationen Probleme auf, wenn solche zweikomponentigen Polyurethane als Klebstoffe eingesetzt werden, die die Zusammensetzungen unkontrolliert härten und teilweise Blasen bilden und ungenügend an den Substratschichten haften, oder weil das Katalysatorsystem durch die Feuchtigkeit deaktiviert wird. Weiterhin ist die Lagerstabilität der zweikomponentigen Zusammensetzungen oft ungenügend, da sich die katalytische Aktivität über die Lagerzeit verändert, was gerade bei industriellen, automatisierten Laminierprozessen mit grossflächiger, dünnschichtiger Klebstoffauftragung zu Störungen der Prozesse führt.

Ein weiteres, konkreteres Beispiel einer dreikomponentigen Polyurethanzusammensetzung speziell für Laminierverklebungen ist in WO 2023/031304 A1 offenbart. Diese Publikation offenbart dreikomponentige Polyurethanzusammensetzungen, die bezüglich der ebengenannten Probleme optimiert wurden. Die in dieser Publikation offenbarten Zusammensetzungen umfassen eine Polyolkomponente, welche neben einem Polyol eine Thiolverbindung enthält, eine Katalysatorkomponente, welche neben dem Härtungskatalysator ein Trockenmittel umfasst, sowie eine loscyanatkomponente. Durch die Trennung der drei Hauptbestandteile Polyol, Isocyanat, sowie Katalysator und dem Einsatz des Trockenmittels können die Probleme wie oben beschrieben hinsichtlich der Feuchtigkeitsempfindlichkeit und Lagerstabilität weitgehend gelöst werden. Allerdings lehrt diese Publikation kein Laminierverfahren, welches eine flexible Einstellung der Topfzeit über die einzelnen Klebeschichten erlauben würde. Durch den Einsatz der gelehrten Thiolverbindung kann zwar die Topfzeit des gesamten Klebeverfahrens verlängert und die Presszeit gleichzeitig verkürzt werden, im Vergleich mit einer zweikomponentigen Polyurethanzusammensetzung, jedoch nur innerhalb enger Grenzen und nicht immer in erwünschtem Ausmass, da die Topfzeit aller einzelner Klebstoffschichten nach wie vor identisch ist.

Somit besteht das Bedürfnis nach einem Laminierklebstoff auf Polyurethanbasis, welcher eine dynamisch einstellbare Topfzeit über den gesamten Verklebungsprozess erlaubt, wobei die Topfzeit bei jeder Klebstoffschicht kürzer wird, und welche basierend auf Parametern wie der Umgebungstemperatur dynamisch angepasst werden kann, wobei nach Abschluss der Verklebung eine extrem rasche Aushärtung nach aussergewöhnlich kurzer Presszeit möglich sein soll.

### Darstellung der Erfindung

Aufgabe der vorliegenden Erfindung ist es daher, eine dreikomponentige Polyurethanzusammensetzung zur Verfügung zu stellen, welche sehr schnell zu einer mechanisch ausgezeichneten und als Laminierklebstoff geeigneten Masse aushärtet, aber dabei gleichzeitig eine genügend lange, über die einzelnen Klebeschichten dynamisch einstellbare Topfzeit aufweist, dass sie problemlos verarbeitet werden kann und in äusserst kurzer Zeit verpresst werden kann und somit aussergewöhnlich schnelle Taktzeiten erlaubt, die nicht von der Umgebungstemperatur abhängen.

Überraschenderweise wird diese Aufgabe mit der erfindungsgemässen dreikomponentigen Polyurethanzusammensetzung gemäss Anspruch 1 gelöst. Sie besteht aus drei individuell verpackten Komponenten, welche erst vor oder bei Applikation gemischt werden. Die erste Komponente und die zweite Komponente umfassen jeweils wenigstens ein Polyol sowie eine Verbindung mit mindestens einer Thiolgruppe sowie mindestens einen Metallkatalysator, wobei die erste Komponente mindestens die 1.5-fache Menge an Katalysator enthält wie in der zweiten Komponente enthalten ist. Die dritte Komponente schliesslich umfasst mindestens ein Polyisocyanat. Durch das Mischverhältnis der ersten und zweiten Komponenten kann die Topfzeit der Klebeschichten dynamisch eingestellt werden. So kann ein Verfahren zum Verkleben von mindestens drei Substraten, welche über Klebeschichten verbunden werden, durchgeführt werden, das bezüglich der benötigten Presszeiten am Ende der Verklebung und damit der benötigten Taktzeiten unabhängig von der Umgebungstemperatur in höchstem Masse optimiert werden kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Polyurethanzusammensetzung geeignet als Laminierklebstoff, bestehend aus drei bei der Anwendung zu mischenden Komponenten **A-1, A-2** und **B;** wobei
- die erste Komponente **A-1** und die zweite Komponente **A-2** jeweils
   - mindestens ein Polyol **P** mit einer OH-Funktionalität im Bereich von 1.5 bis 4 und einem mittleren Molekulargewicht (Zahlenmittel) Mₙ im Bereich von 250 bis 15'000 g/mol, sowie
   - mindestens einen Metallkatalysator **K** für die Reaktion von Hydroxylgruppen und Isocyanatgruppen, der Thiokomplexe bilden kann, sowie
   - mindestens eine Verbindung **T,** die mindestens eine Thiolgruppe aufweist, umfassen;
      wobei das molare Verhältnis aller Thiolgruppen der mindestens einen Verbindung **T** zu allen Metallatomen des mindestens einen Metallkatalysators **K** in der ersten Komponente **A-1** und in der zweiten Komponente **A-2** jeweils zwischen 1:1 und 250:1 liegt; und
- die dritte Komponente **B**
   - mindestens ein Polyisocyanat **I** umfasst;
dadurch gekennzeichnet, dass
die erste Komponente **A-1** mindestens die 1.5-fache Menge an Metallkatalysator **K** enthält wie in der zweiten Komponente **A-2** enthalten ist, bezogen auf die molare Menge an Metallatomen des Metallkatalysators **K** in der jeweiligen Komponente.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Der Begriff "Polymer" umfasst im vorliegenden Dokument einerseits ein Kollektiv von chemisch einheitlichen, sich aber in Bezug auf

Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Molekulargewicht" versteht man im vorliegenden Dokument die molare Masse (in Gramm pro Mol) eines Moleküls oder eines Molekül-Rests. Als "mittleres Molekulargewicht" wird das Zahlenmittel Mₙ einer polydispersen Mischung von oligomeren oder polymeren Molekülen oder Molekül-Resten bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23 °C bezeichnet. Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die erfindungsgemässe Polyurethanzusammensetzung nach dem Mischen der drei Komponenten bei einer bestimmten Temperatur, beispielsweise 20°C oder wie für diese Topfzeit definiert, eine komplexe Viskosität von 1000 Pa s erreicht, gemessen auf einem thermostatisierten Platten-Platten Rheometer MCR 302 (Firma Anton Paar) mit einem Plattendurchmesser von 25 mm und einem Plattenabstand von 1 mm bei einer Kreisfrequenz von 6 rad s⁻¹ (0.95 Hz). Nach Erreichen dieses Viskositätswertes steigt die Viskosität der Zusammensetzung durch die immer schnelle fortschreitende Aushärtung sehr rasch an. Eine allfällige Verpressung verklebter Substrate muss innerhalb der Topfzeit beginnen, um ein gut verbundenes Verbundelement zu gewährleisten. Als "Presszeit" wird in diesem Dokument die Zeit bezeichnet, welche benötigt wird, um zwei Substrate eines Verbundmaterials zusammenzupressen, bis die Aushärtung und der Adhäsionsaufbau der dazwischen applizierten erfindungsgemässen Polyurethanzusammensetzung so weit fortgeschritten ist, dass die Verklebung eine definierte Grundfestigkeit aufweist, um bewegt zu werden, insbesondere eine Zugfestigkeit von 1 MPa. Üblicherweise entspricht die Presszeit der Topfzeit der am langsamsten aushärtenden applizierten Klebstoffschicht, plus der noch nicht fertig abgelaufenen Topfzeit dieser Klebstoffschicht. Da die Verpressung noch während der Topfzeit begonnen werden muss, wird der noch nicht abgelaufene Anteil der Topfzeit zur kompletten Topfzeit der langsamsten Klebeschicht bei der Berechnung der minimalen Presszeit hinzuaddiert.

Als "Raumtemperatur" wird im vorliegenden Dokument eine Temperatur von 23 °C bezeichnet.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Alle im Dokument erwähnten Industriestandards und Normen beziehen sich auf die zum Zeitpunkt der Einreichung der Erstanmeldung gültigen Fassungen.

### Die erste Komponente A-1 und die zweite Komponente A-2

Die erste Komponente **A-1** und die zweite Komponente **A-2** umfassen jeweils
- mindestens ein Polyol **P** mit einer OH-Funktionalität im Bereich von 1.5 bis 4 und einem mittleren Molekulargewicht (Zahlenmittel) Mₙ im Bereich von 250 bis 15'000 g/mol, sowie
- mindestens einen Metallkatalysator **K** für die Reaktion von Hydroxylgruppen und Isocyanatgruppen, der Thiokomplexe bilden kann, sowie
- mindestens eine Verbindung **T,** die mindestens eine Thiolgruppe aufweist,
wobei das molare Verhältnis aller Thiolgruppen der mindestens einen Verbindung **T** zu allen Metallatomen des mindestens einen Metallkatalysators **K** in der ersten Komponente **A-1** und in der zweiten Komponente **A-2** jeweils zwischen 1:1 und 250:1 liegt.

Weiterhin gilt, dass die erste Komponente **A-1** mindestens die 1.5-fache Menge an Metallkatalysator **K** enthält wie in der zweiten Komponente **A-2** enthalten ist, bezogen auf die molare Menge an Metallatomen des Metallkatalysators **K** in der jeweiligen Komponente.

Prinzipiell können die erste Komponente **A-1** und die zweite Komponente **A-2** ähnlich oder sogar identisch aufgebaut sein, solange die erste Komponente **A-1** wie definiert einen höheren Anteil an Metallkatalysator **K** enthält als die zweite Komponente **A-2**.

Bevorzugt liegen jedoch weitere Unterschiede vor, insbesondere in der jeweiligen Menge an Verbindung **T.** Dies wird weiter unten genauer beschrieben.

Die erste Komponente **A-1** und die zweite Komponente **A-2** enthalten jeweils zunächst mindestens ein Polyol **P** mit einer OH-Funktionalität im Bereich von 1.5 bis 4 und einem mittleren Molekulargewicht im Bereich von 250 bis 15'000 g/mol.

Geeignete Polyole **P** sind prinzipiell alle gängigen Polyole zur Herstellung von Polyurethanpolymeren. Geeignet sind insbesondere Polyetherpolyole, Polyesterpolyole, Poly(meth)acrylatpolyole, Polybutadienpolyole, Polycarbonatpolyole u sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole. Bevorzugt sind Polyoxyethylentriole und Polyoxypropylentriole, insbesondere Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 15'000 g/mol, sowie Polyoxyethylendiole, Polyoxyethylentriole, Polyoxypropylendiole und Polyoxypropylentriole mit einem Molekulargewicht von 400 bis 15'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole, insbesondere Polyoxypropylenpolyoxyethylentriole.

Weiterhin geeignet sind Hydroxylgruppen terminierte Polybutadienpolyole, wie beispielsweise solche, die durch Polymerisation von 1 ,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1 ,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate, die aus der Copolymerisation von CO₂ mit Epoxiden, wie Ethylenoxid und Propylenxid, zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Alle genannten Polyole weisen ein mittleres Molekulargewicht von 250 bis 15'000 g/mol, insbesondere von 300 bis 10'000 g/mol, bevorzugt von 350 bis 7'500 g/mol, meist bevorzugt von 400 bis 5'000 und eine mittlere OH-Funktionalität im Bereich von 1.5 bis 4, bevorzugt 1.7 bis 3.5, meist bevorzugt 2.0 bis 3.0 auf. Die Zusammensetzung kann jedoch durchaus auch Anteile an Monoolen (Polymere mit nur einer Hydroxylgruppe) enthalten.

Besonders geeignete Polyole sind Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol. Von allen genannten sind die jeweiligen Triole besonders bevorzugt.

In bevorzugten Ausführungsformen umfasst das Polyol **P** mindestens ein Polyethertriol oder eine Mischung aus Polyethertriolen.

Die erste Komponente **A-1** und die zweite Komponente **A-2** können jeweils weiterhin mindestens ein Diol mit zwei Hydroxylgruppen, die über eine C2- bis C9-Kohlenstoffkette verbunden sind, enthalten.

Insbesondere geeignet sind Diole ausgewählt aus der Gruppe bestehend aus Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Besonders bevorzugt sind Diole ausgewählt aus der Gruppe bestehend aus 1,4-Butandiol, 1,5-Pentandiol, 1,6-Hexandiol, 1,7-Heptandiol, 1,8-Octandiol und 1,9-Nonandiol.

Diese Diole sind kommerziell gut zugänglich und ermöglichen Polyurethane mit besonders hohen E-Moduln bei geringer Dehnung nach der Aushärtung.

Zusätzlich zu diesen genannten Polyolen **P** und den genannten Diolen können kleine Mengen von weiteren niedermolekularen zwei- oder mehrwertigen Alkoholen wie beispielsweise Diethylenglykol, Triethylenglykol, die isomeren Dipropylenglykole und Tripropylenglykole, die isomeren Decandiole und Undecandiole, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedermolekulare Alkoxylierungsprodukte der vorgenannten zwei- und mehrwertigen Alkohole, sowie Mischungen der vorgenannten Alkohole mitverwendet werden. Weiterhin können auch Polyole, die andere Heteroatome enthalten, wie beispielsweise Methyldiethanolamin oder Thiodiglykol, enthalten sein.

Komponente **A-1** enthält bevorzugt 20 bis 80 Gew.-%, bevorzugt 30 bis 70 Gew.-%, insbesondere 40 bis 60 Gew.-%, Polyol **P,** bezogen auf die Komponente **A-1.**

Komponente **A-2** enthält bevorzugt 20 bis 80 Gew.-%, bevorzugt 30 bis 70 Gew.-%, insbesondere 40 bis 60 Gew.-%, Polyol **P,** bezogen auf die Komponente **A-2.**

Die erste Komponente **A-1** und die zweite Komponente **A-2** enthalten jeweils weiterhin mindestens eine Verbindung **T,** die mindestens eine Thiolgruppe aufweist. Geeignet sind alle Verbindungen, die mindestens eine Thiol- oder Mercaptogruppe aufweisen und die sich in der erfindungsgemässen Zusammensetzung einformulieren lassen. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 1 bis 4, am meisten bevorzugt 1 oder 2 Thiolgruppen. Verbindungen mit einer Thiolgruppe haben den Vorteil, dass keine tendenziell schwerlöslichen Komplexe mit dem Metallkatalysator **K** entstehen und die Topfzeit sowie die Offenzeit besonders genau eingestellt werden können. Verbindungen mit zwei oder mehr Thiolgruppen haben den Vorteil, dass die mechanischen Eigenschaften der Zusammensetzung nach dem Aushärten verbessert werden.

Geeignete Verbindungen **T** mit einer Thiolgruppe sind beispielsweise Alkylmercaptoacetate (Alkylthioglycolate), insbesondere Methylthioglycolat und Isooctylthioglycolat, 3-Mercaptopropyltrialkoxysilane, insbesondere 3-Mercaptopropyltrimethoxysilan und 3-Mercaptopropyltriethoxysilan, 3-Mercapto-1,2-propandiol, 2-Mercaptotoluimidazol oder 2-Mercaptobenzothiazol.

Geeignete Verbindungen **T** mit mehr als einer Thiolgruppe sind beispielsweise Ethylenglykol-di(3-mercaptopropionat), Ethylenglykol-dimercaptoacetat, Trimethylolpropan-tri(3-mercaptopropionat), Dipentaerythritol-hexa(3-mercaptopropionat), 2,3-Dimercapto-1,3,4-thiadiazol oder Pentaerythritoltetrakis(3-mercaptopropionat).

Bevorzugt ist die Verbindung **T** ausgewählt aus der Gruppe bestehend aus Ethylenglykol-di(3-mercaptopropionat), Ethylenglykol-dimercaptoacetat, Dipentaerythritol-hexa(3-mercaptopropionat), Trimethylolpropan-tri(3-mercaptopropionat), Alkylmercaptoacetaten, 3-Mercaptopropyltrialkoxysilanen, sowie Thiol-funktionellen Siloxan-Oligomeren.

Das molare Verhältnis aller Thiolgruppen der mindestens einen Verbindung **T** zu allen Metallatomen des mindestens einen Metallkatalysators **K** muss zwischen 1:1 und 250:1 liegen. Bevorzugt liegt es zwischen 1.5:1 und 150:1, insbesondere zwischen 2:1 und 100:1. Durch dieses Mengenverhältnis kann die Topfzeit eingestellt werden, und zwar innerhalb der intrinsischen Grenzen der jeweiligen Zusammensetzung, bedingt beispielsweise durch den Gehalt an Katalysator, die Reaktivität der enthaltenen Isocyanate und deren Menge. Dabei ist die untere Grenze der Topfzeit diejenige Topfzeit, die in einer gegebenen Zusammensetzung bei Verwendung einer bestimmten Katalysatormenge ohne Zusatz der Verbindung **T** erhalten wird. In vielen Fällen, die für die erfindungsnahe Anwendung als Laminierklebstoff geeignet sind und bedingt durch die hohe Menge an Isocyanatgruppen in Anwesenheit eines Katalysators aber ohne Verbindung **T,** wird dabei gar keine wirkliche Topfzeit erreicht, und die Zusammensetzung beginnt praktisch beim Mischen der beiden Komponenten auszuhärten.

Die obere Grenze der einstellbaren Topfzeit ist dementsprechend diejenige Topfzeit, die ohne Verwendung eines Katalysators bedingt durch die nicht katalysierte Isocyanat-Hydroxylreaktion erreicht werden würde. Diese Reaktion beginnt auch ohne Verwendung eines Katalysators irgendwann nach dem Mischen der beiden Komponenten anzulaufen. Allerdings läuft die Reaktion ohne Katalysator viel langsamer und unter Ausbildung minderwertiger mechanischer und anderer Eigenschaften des gehärteten Materials ab.

Der wesentliche Vorteil, der durch die erfindungsgemässe dreikomponentige Polyurethanzusammensetzung erreicht wird, ist ein ausserordentlich rasch aushärtendes und Festigkeit aufbauendes System, das aber gleichzeitig eine ausreichend lange Topfzeit aufweist, um anwenderfreundlich verarbeitet werden zu können. Weiterhin ist die benötigte Presszeit trotzdem sehr kurz im Falle von Verbundmaterialien und vor allem nicht anfällig auf schwankende Luftfeuchtigkeit. Somit können beispielsweise Verklebungen auch an grösseren Substraten durchgeführt werden, die sehr kurz nach der Applikation des Klebstoffs und kurzzeitiger Verpressung der Substrate bereits weiterverarbeitet oder transportiert werden können. Dies führt beispielsweise zu einer signifikanten Verkürzung von Taktzeiten in der industriellen Fertigung. Ein weiterer Vorteil der erfindungsgemässen Polyurethanzusammensetzungen ist die Möglichkeit, die Topfzeit wie oben beschrieben einstellen zu können. Dies ist insbesondere für automatisierte Anwendungen sehr vorteilhaft und kann beispielsweise eine weitere Optimierung der Taktzeiten in der industriellen Fertigung ermöglichen, da die Topfzeit auf die gewünschte Anwendung eingestellt werden können.

Um dies noch effizienter steuern zu können, ist es vorteilhaft, wenn die erste Komponente **A-1** und die zweite Komponente **A-2** nicht nur unterschiedliche Mengen an Katalysator **K** enthalten, sondern auch unterschiedliche Mengen an Verbindung **T.**

Dementsprechend enthält in bevorzugten Ausführungsformen die zweite Komponente **A-2** mindestens doppelt so viel Verbindung **T** wie die erste Komponente **A-1,** bezogen auf die molare Menge an Thiolgruppen der Verbindung **T** in der jeweiligen Komponente.

In denselben oder anderen bevorzugten Ausführungsformen der erfindungsgemässen dreikomponentigen Polyurethanzusammensetzung liegt das molare Verhältnis aller Thiolgruppen der mindestens einen Verbindung **T** zu allen Metallatomen des mindestens einen Metallkatalysators **K** in der zweiten Komponente **A-2** höher ist als in der ersten Komponente **A-1**.

In diesen Ausführungsformen ist nicht nur absolut eine höhere Menge an Verbindung T in der zweiten Komponente **A-2** enthalten als in der ersten Komponente **A-1,** sondern auch relativ zu der jeweiligen Menge an Katalysator **K.** Damit kann die Topfzeit der Zusammensetzung über die Mischung der beiden Komponenten **A-1** und **A-2** noch exakter eingestellt werden.

In bevorzugten Ausführungsformen liegt das molare Verhältnis aller Thiolgruppen der mindestens einen Verbindung **T** zu allen Metallatomen des mindestens einen Metallkatalysators **K** in der zweiten Komponente **A-2** zwischen 2.5:1 und 250:1, insbesondere zwischen 5:1 und 100:1, meist bevorzugt zwischen 7.5:1 und 15:1.

In denselben oder anderen Ausführungsformen liegt das molare Verhältnis aller Thiolgruppen der mindestens einen Verbindung **T** zu allen Metallatomen des mindestens einen Metallkatalysators **K** in der ersten Komponente **A-1** zwischen 1:1 und 50:1, insbesondere zwischen 1.1:1 und 10:1, meist bevorzugt zwischen 1.2:1 und 2.5:1.

Die erste Komponente **A-1** enthält bevorzugt 0.5 bis 2.5 Gew.-%, bevorzugt 0.75 bis 1.5 Gew.-%, insbesondere 1.0 bis 1.25 Gew.-%, Verbindung **T,** die mindestens eine Thiolgruppe aufweist, bezogen auf die gesamte erste Komponente **A-1**.

Die zweite Komponente **A-2** enthält bevorzugt 1.0 bis 5.0 Gew.-%, bevorzugt 1.5 bis 4.0 Gew.-%, insbesondere 2.0 bis 3.0 Gew.-%, Verbindung **T,** die mindestens eine Thiolgruppe aufweist, bezogen auf die gesamte zweite Komponente **A-2**.

Die erste Komponente **A-1** und die zweite Komponente **A-2** enthalten jeweils weiterhin jeweils mindestens einen Metallkatalysator **K** für die Reaktion von Hydroxylgruppen und Isocyanatgruppen, der Thiokomplexe bilden kann, wobei die erste Komponente **A-1** mindestens die 1.5-fache Menge an Metallkatalysator **K** enthält wie die zweite Komponente **A-2,** bezogen auf die molare Menge an Metallatomen des Metallkatalysators K in der jeweiligen Komponente.

Bevorzugt enthält die erste Komponente **A-1** höchstens die 5-fache Menge an Metallkatalysator **K** wie die zweite Komponente **A-2,** um eine gut mischbare Zusammensetzung und kontrollierbare Topfzeit der vermischten Zusammensetzung zu erhalten.

Durch die unterschiedliche Menge an Metallkatalysator **K** in der ersten Komponente **A-1** und der zweiten Komponente **A-2** können die Topfzeit der vermischten Zusammensetzung sowie die Aushärtungsgeschwindigkeit sehr präzise eingestellt werden, allein über das Mischverhältnis der beiden Komponenten **A-1** und **A-2**.

Bevorzugt enthält die erste Komponente **A-1** die 2-fache bis 4-fache Menge an Metallkatalysator **K** wie die zweite Komponente **A-2,** bezogen auf die molare Menge an Metallatomen des Metallkatalysators **K** in der jeweiligen Komponente, insbesondere die 2.5-fache bis 3-fache Menge an Metallkatalysator **K.**

Als Metallkatalysator **K** sind somit alle Metallkatalysatoren geeignet, welche in der Polyurethanchemie als Vernetzungskatalysator eingesetzt werden können und gleichzeitig in Gegenwart von Thiolen mit diesen Thiokomplexe bilden können.

Geeignete Metallkatalysatoren **K** sind beispielsweise Bismut-, Zink-, Zinn-, Eisen- oder Zirkoniumverbindungen, was Komplexe und Salze dieser Metalle einschliesst. Bevorzugt sind eine Bismut(III)-, Zink(II)-, Zirkonium(IV)- oder Zinn(II)-Verbindung oder eine Organozinn(IV)-Verbindung. Am meisten bevorzugt sind Zinn(IV)-Verbindungen, Zinn(II)-Verbindungen, und/oder Bismut(III)-Verbindungen, da diese besonders hohe Aktivität besitzen, dabei aber am wenigsten empfindlich auf Feuchtigkeit reagieren.

Insbesondere bevorzugt umfasst der Metallkatalysator **K** eine Bismut-Verbindung, insbesondere eine Bismut(III)-Verbindung. Eine Bismut-Verbindung hat den Vorteil, dass sie, neben den erwünschten Eigenschaften als Katalysator und Thiokomplex-Bildner, eine geringe Akuttoxizität besitzt.

Als Bismut-Verbindung kann eine Vielzahl von herkömmlichen Bismut-Katalysatoren verwendet werden. Dabei handelt es sich beispielsweise um Bismutcarboxylate wie z.B. Bismut-Acetat, -Oleat, -Octoat oder-Neodecanoat, Bismutnitrat, Bismuthalogenide wie z.B. Bromid, Chlorid, lodid, Bismutsulfid, basische Bismutcarboxylate wie z.B. Bismutyl-neodecanoat, Bismut-subgallat oder Bismut-subsalicylat, sowie Gemische davon.

In einer bevorzugten Ausführungsform ist der Metallkatalysator **K** ein Bismut(III)-Komplex, der mindestens einen Liganden auf 8-Hydroxychinolinbasis aufweist. Solche Komplexe sind beschrieben in der EP 1551895. Bevorzugt handelt es sich dabei um ein Bismut(III)-Carboxylat, das ein Moläquivalent eines 8-Hydroxychinolinliganden aufweist.

In einer weiteren bevorzugten Ausführungsform ist der Metallkatalysator **K** ein Bismut(III)-Komplex, der mindestens einen Liganden auf 1,3-Ketoamidbasis aufweist. Solche Komplexe sind beschrieben in der EP 2791153. Bevorzugt handelt es sich dabei um ein Bismut(III)-Carboxylat, das 1 bis 3 Moläquivalente eines 1,3-Ketoamidliganden aufweist.

Als Zinn-Verbindung kann eine Vielzahl von herkömmlichen Zinn-Katalysatoren verwendet werden. Besonders geeignete OrganozinnVerbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, oder Alkylzinnthioester.

In einer bevorzugten Ausführungsform ist der Metallkatalysator **K** ein Doctylzinndicarboxylat, insbesondere Dioctylzinndilaurat.

Die erste Komponente **A-1** enthält bevorzugt 0.5 bis 2.5 Gew.-%, bevorzugt 0.6 bis 1.5 Gew.-%, insbesondere 0.7 bis 1.2 Gew.-%, Metallkatalysator **K,** bezogen auf die gesamte erste Komponente **A-1**.

Die zweite Komponente **A-2** enthält bevorzugt 0.1 bis 0.7 Gew.-%, bevorzugt 0.15 bis 0.5 Gew.-%, insbesondere 0.2 bis 0.4 Gew.-%, Metallkatalysator **K,** bezogen auf die gesamte zweite Komponente **A-2**.

Durch die hohe Menge an Metallkatalysator **K,** insbesondere in der ersten Komponente **A-1,** kann bei jedem Mischverhältnis eine ausserordentlich rasche Aushärtung nach Ende der Topfzeit erreicht werden, was bei industriellen Klebeprozessen sehr erwünscht ist, da damit die Taktzeit erhöht werden kann.

Die erste Komponente **A-1** und die zweite Komponente **A-2** können noch weitere, optionale Bestandteile enthalten. Diese werden weiter unten detailliert aufgeführt.

Eine bevorzugte erste Komponente **A-1** enthält, jeweils bezogen auf die gesamte Komponente **A-1,**
- 30 bis 80 Gew.-%, bevorzugt 40 bis 70 Gew.-%, insbesondere 50 bis 60 Gew.-%, Polyol **P,**
- 1 bis 25 Gew.-%, bevorzugt 5 bis 20 Gew.-%, insbesondere 10 bis 15 Gew.-%, Diol mit zwei Hydroxylgruppen, die über eine C2- bis C9-Kohlenstoffkette verbunden sind,
- 0.5 bis 2.5 Gew.-%, bevorzugt 0.75 bis 2.0 Gew.-%, insbesondere 1.0 bis 1.5 Gew.-%, Verbindung **T,** die mindestens eine Thiolgruppe aufweist,
- 0.5 bis 2.0 Gew.-%, bevorzugt 0.6 bis 1.5 Gew.-%, insbesondere 0.7 bis 1.0 Gew.-%, Metallkatalysator **K,**
   und
- 10 bis 50 Gew.-%, bevorzugt 15 bis 40 Gew.-%, insbesondere 20 bis 30 Gew.-%, Füllstoffe,
   sowie gegebenenfalls weitere Bestandteile.

Eine bevorzugte zweite Komponente **A-2** enthält, jeweils bezogen auf die gesamte Komponente **A-2,**
- 30 bis 80 Gew.-%, bevorzugt 40 bis 70 Gew.-%, insbesondere 50 bis 60 Gew.-%, Polyol **P,**
- 1 bis 25 Gew.-%, bevorzugt 5 bis 20 Gew.-%, insbesondere 10 bis 15 Gew.-%, Diol mit zwei Hydroxylgruppen, die über eine C2- bis C9-Kohlenstoffkette verbunden sind,
- 1.0 bis 3.5 Gew.-%, bevorzugt 1.5 bis 3.0 Gew.-%, insbesondere 2.0 bis 2.5 Gew.-%, Verbindung **T,** die mindestens eine Thiolgruppe aufweist,
- 0.1 bis 2.0 Gew.-%, bevorzugt 0.15 bis 1.0 Gew.-%, insbesondere 0.2 bis 0.5 Gew.-%, Metallkatalysator **K,**
   und
- 10 bis 50 Gew.-%, bevorzugt 15 bis 40 Gew.-%, insbesondere 20 bis 30 Gew.-%, Füllstoffe,
   sowie gegebenenfalls weitere Bestandteile.

### Die dritte Komponente B

Die dritte Komponente **B** enthält zunächst mindestens ein Polyisocyanat **I.**

Das Polyisocyanat **I** ist in relativ hohen Mengen enthalten, was für die Ausbildung genügend guter mechanischer Eigenschaften für die Verwendung als Laminierklebstoff sehr vorteilhaft ist.

Die dritte Komponente enthält bevorzugt so viel an Polyisocyanat I, dass mindestens 2.5 Gew.-%, insbesondere mindestens 3 Gew.-%, bevorzugt mindestens 5 Gew.-%, bezogen auf die gesamte

Polyurethanzusammensetzung, an Isocyanatgruppen enthalten sind.

Als Polyisocyanate **I** können alle handelsüblichen, für die Polyurethanherstellung geeigneten Polyisocyanate, insbesondere Diisocyanate, verwendet werden.

Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4`-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,5-Pentamethylendiisocyanat (PDI) 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-lsocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und - 1,4-xylylendiisocyanat (m- und p-TMXDI), Bis-(1-lsocyanato-1-methyl-ethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat. Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Covestro), Tolonate^{®} HDB und HDB-LV (von Vencorex) und Duranate^{®} 24A-100 (von Asahi Kasei); HDI-Isocyanurate, wie Desmodur^{®} N 3300, N 3600 und N 3790 BA (alle von Covestro), Tolonate^{®} HDT, HDT-LV und HDT-LV2 (von Vencorex), Duranate^{®} TPA-100 und THA-100 (von Asahi Kasei) und Coronate^{®} HX (von Nippon Polyurethane); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate, wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); sowie gemischte Isocyanurate auf Basis TDI/HDI, zum Beispiel als Desmodur^{®} HL (von Covestro). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Covestro) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Covestro), Suprasec^{®} 2030 und Suprasec^{®} 2050 (von Huntsman), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat I ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4`-, 2,4'- oder 2,2'-Diphenylmethandiisocyanat und beliebige Gemische dieser Isomeren) solcher flüssiger Formen von MDI beträgt insbesondere 50 bis 95 Gew.-%, insbesondere 60 bis 90 Gew.-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat I der dritten Komponente **B** kann Anteile von Isocyanatgruppen-haltigen Polyurethanpolymeren enthalten. Entweder kann die zweite Komponente ein separat hergestelltes Isocyanatgruppen-haltiges Polyurethanpolymer umfassen, oder das Polyisocyanat wurde mit mindestens einem Polyol, beispielsweise einem Polyol **P** wie oben beschrieben, insbesondere einem Polyetherpolyol, vermischt, wobei die Isocyanatgruppen gegenüber den OH-Gruppen in einem stöchiometrischen Überschuss vorliegen.

Durch den Einsatz von Isocyanatgruppen-haltigen Polyurethanpolymeren können die mechanischen Eigenschaften der Zusammensetzung verbessert werden. Daher sind sie in bevorzugten Ausführungsformen enthalten. Komponente **B** enthält bevorzugt 50 bis 100 Gew.-%, insbesondere 60 bis 75 Gew.-%, Polyisocyanat **I,** bezogen auf die dritte Komponente **B.**

In bevorzugten Ausführungsformen enthält Komponente **B** als Polyisocyanat **I** zwischen 45 und 70 Gew.-%, insbesondere zwischen 50 und 60 Gew.-% Polyisocyanat, welches kein Polyurethanpolymer ist, insbesondere polymeres MDI und/oder bei Raumtemperatur flüssige MDI-Typen, welche Anteile von MDI-Carbodiimiden oder deren Addukte enthalten, sowie bis zu 20 Gew.-%, insbesondere zwischen 5 und 15 Gew.-%, Isocyanatgruppen-haltiges Polyurethanpolymer.

In bevorzugten Ausführungsformen enthält die erfindungsgemässe Zusammensetzung mindestens ein Trocknungsmittel. Dabei ist bevorzugt, dass wenigstens die dritte Komponente **B** mindestens ein Trockungsmittel enthält, bevorzugt ebenfalls mindestens eine der Komponente **A-1** und **A-2.** Ein Trocknungsmittel erhöht die Lagerstabilität und ist insbesondere bei grossflächigen Laminierverklebungen vorteilhaft.

Als Trocknungsmittel geeignet sind alle in der Polyurethanchemie üblicherweise eingesetzten chemischen oder physikalischen Trockungsmittel. Geeignet sind insbesondere reaktive Silane, wie Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, oligomere Formen dieser Silane, Molekularsiebpulver, Calciumoxid, hochreaktive Isocyanate wie p-Tosylisocyanat, monomere Diisocyanate, Mono-Oxazolidine wie Incozol^{®} 2 (von Incorez) oder Orthoameisensäureester.

Bevorzugt als Trocknungsmittel sind Molekularsiebe oder Zeolithe auf Aluminosilikatbasis, insbesondere in feiner Pulverform, sowie feuchtigkeitsreaktive Organosilane oder -siloxane.

Komponente **B** enthält bevorzugt 1 bis 20 Gew.-%, bevorzugt 2 bis 15 Gew.-%, insbesondere 3 bis 10 Gew.-%, Trocknungsmittel, bezogen auf die dritte Komponente **B.**

Komponenten **A-1** und **A-2** enthalten, unabhängig voneinander, bevorzugt 0.5 bis 10 Gew.-%, bevorzugt 1 bis 7.5 Gew.-%, insbesondere 2 bis 5 Gew.-%, Trocknungsmittel, bezogen auf die jeweilige Komponente **A-1** oder **A-2.** Trocknungsmittel sind insbesondere bevorzugt, wenn die zu verklebenden Substrate sehr feucht sind.

Eine bevorzugte dritte Komponente **B** enthält, jeweils bezogen auf die gesamte Komponente **B,**
- 30 bis 80 Gew.-%, bevorzugt 40 bis 70 Gew.-%, insbesondere 50 bis 60 Gew.-%, Polyisocyanat **I,** welches kein Polyurethanpolymer ist,
- 1 bis 25 Gew.-%, bevorzugt 5 bis 20 Gew.-%, insbesondere 7.5 bis 15 Gew.-%, Isocyanatgruppen-haltiges Polyurethanpolymer,
- 1 bis 15 Gew.-%, bevorzugt 2 bis 12 Gew.-%, insbesondere 3 bis 10 Gew.-%, Trocknungsmittel,
- 0.5 bis 15 Gew.-%, bevorzugt 1 bis 10 Gew.-%, insbesondere 2.5 bis 7.5 Gew.-%, Weichmacher,
   und
- 5 bis 50 Gew.-%, bevorzugt 10 bis 40 Gew.-%, insbesondere 20 bis 30 Gew.-%, Füllstoffe,
   sowie gegebenenfalls weitere Bestandteile.

### Weitere Bestandteile

Die erfindungsgemässe Polyurethanzusammensetzung kann in einigen oder allen Komponenten neben den bereits erwähnten notwendigen Bestandteilen weitere optionale Bestandteile, wie sie der Fachmann aus der Mehrkomponenten-Polyurethanchemie her kennt, enthalten. Diese können in nur einer Komponente oder in zwei Komponenten oder in allen Komponenten mit gleichen oder unterschiedlichen Mengen vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-AluminiumSilikat), Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln, sowie flammhemmende Füllstoffe, wie Hydroxide oder Hydrate, insbesondere Hydroxide oder Hydrate von Aluminium, bevorzugt Aluminiumhydroxid.

Die Zugabe von Füllstoffen ist dahingehend von Vorteil, dass dadurch die Festigkeit der ausgehärteten Polyurethanzusammensetzung erhöht wird. Bevorzugt enthält die Polyurethanzusammensetzung mindestens einen Füllstoff ausgewählt aus der Gruppe bestehend aus Calciumcarbonat, Russ, Kaolin, pyrogene Kieselsäure, Baryt, Talk, Quarzmehl, Dolomit, Wollastonit, Kaolin, calciniertes Kaolin und Glimmer (Mica). Als Füllstoffe besonders bevorzugt sind gemahlene Calciumcarbonate, calcinierte Kaoline und pyrogene Kieselsäure. Letztgenannte hat zudem einen verdickenden Effekt und kann die Thixotropie erhöhen.

Es ist kann von Vorteil sein, eine Mischung verschiedener Füllstoffe einzusetzen. Am meisten bevorzugt sind Kombinationen von calcinierten Kaolinen und pyrogener Kieselsäure.

In bevorzugten Ausführungsformen der erfindungsgemässen Polyurethanzusammensetzung ist in mindestens in einer der drei Komponenten **A-1, A-2** und **B** zusätzlich mindestens ein Füllstoff enthalten, bevorzugt in beiden Komponenten **A-1** und **A-2** und besonders bevorzugt in allen drei Komponenten. Bevorzugt ist dies calciniertes Kaolin und pyrogener Kieselsäure. Die Verwendung von Füllstoffen hat den Vorteil, dass nicht nur die Zusammensetzung kostenmässig günstiger formuliert werden kann, sondern die Mechanik, Anwendungseigenschaften wie Viskosität und Thixotropie und weitere Eigenschaften wie elektrische Leitfähigkeit, Wärmeleitfähigkeit oder Brennbarkeit können ebenfalls positiv beeinflusst werden.

Als weitere Bestandteile können weiterhin insbesondere Lösungsmittel, Weichmacher und/oder Extender, Pigmente, Rheologiemodifizierer wie insbesondere Polyamidwachse und Harnstoffverbindungen, Haftvermittler wie insbesondere organofunktionelle Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein. Für all diese Additive eignen sich alle in der Polyurethanchemie gängigen Substanzen der jeweiligen Klasse.

Eine bevorzugte dreikomponentige Polyurethanzusammensetzung besteht einer ersten Komponente **A-1,** welche, jeweils bezogen auf die gesamte Komponente **A-1,**
- 30 bis 80 Gew.-%, bevorzugt 40 bis 70 Gew.-%, insbesondere 50 bis 60 Gew.-%, Polyol **P,**
- 1 bis 25 Gew.-%, bevorzugt 5 bis 20 Gew.-%, insbesondere 10 bis 15 Gew.-%, Diol mit zwei Hydroxylgruppen, die über eine C2- bis C9-Kohlenstoffkette verbunden sind,
- 0.5 bis 2.5 Gew.-%, bevorzugt 0.75 bis 2.0 Gew.-%, insbesondere 1.0 bis 1.5 Gew.-%, Verbindung **T,** die mindestens eine Thiolgruppe aufweist,
- 0.5 bis 2.0 Gew.-%, bevorzugt 0.6 bis 1.5 Gew.-%, insbesondere 0.7 bis 1.0 Gew.-%, Metallkatalysator **K,**
- 10 bis 50 Gew.-%, bevorzugt 15 bis 40 Gew.-%, insbesondere 20 bis 30 Gew.-%, Füllstoffe,
   sowie gegebenenfalls weitere Bestandteile, enthält;
sowie
einer zweiten Komponente **A-2,** welche, jeweils bezogen auf die gesamte Komponente **A-2,**
- 30 bis 80 Gew.-%, bevorzugt 40 bis 70 Gew.-%, insbesondere 50 bis 60 Gew.-%, Polyol **P,**
- 1 bis 25 Gew.-%, bevorzugt 5 bis 20 Gew.-%, insbesondere 10 bis 15 Gew.-%, Diol mit zwei Hydroxylgruppen, die über eine C2- bis C9-Kohlenstoffkette verbunden sind,
- 1.0 bis 3.5 Gew.-%, bevorzugt 1.5 bis 3.0 Gew.-%, insbesondere 2.0 bis 2.5 Gew.-%, Verbindung **T,** die mindestens eine Thiolgruppe aufweist,
- 0.1 bis 2.0 Gew.-%, bevorzugt 0.15 bis 1.0 Gew.-%, insbesondere 0.2 bis 0.5 Gew.-%, Metallkatalysator **K,**
   und
- 10 bis 50 Gew.-%, bevorzugt 15 bis 40 Gew.-%, insbesondere 20 bis 30 Gew.-%, Füllstoffe,
   sowie gegebenenfalls weitere Bestandteile, enthält;
sowie
einer dritten Komponente **B,** welche bezogen auf die gesamte Komponente **B,**
- 30 bis 80 Gew.-%, bevorzugt 40 bis 70 Gew.-%, insbesondere 50 bis 60 Gew.-%, Polyisocyanat **I,** welches kein Polyurethanpolymer ist,
- 1 bis 25 Gew.-%, bevorzugt 5 bis 20 Gew.-%, insbesondere 7.5 bis 15 Gew.-%, Isocyanatgruppen-haltiges Polyurethanpolymer,
- 1 bis 15 Gew.-%, bevorzugt 2 bis 12 Gew.-%, insbesondere 3 bis 10 Gew.-%, Trocknungsmittel,
- 0.5 bis 15 Gew.-%, bevorzugt 1 bis 10 Gew.-%, insbesondere 2.5 bis 7.5 Gew.-%, Weichmacher,
   und
- 5 bis 50 Gew.-%, bevorzugt 10 bis 40 Gew.-%, insbesondere 20 bis 30 Gew.-%, Füllstoffe,
sowie gegebenenfalls weitere Bestandteile, enthält.

Die erste Komponente **A-1,** die zweite Komponente **A-2** und die dritte Komponente **B** werden bevorzugt so formuliert, dass ihr Mischungsverhältnis in Volumenteilen im Bereich von **(A-1** + **A-2)** : **B** = 1 : 1 liegt, wie es bei den eben beschriebenen bevorzugten Ausführungsformen der Fall ist. Ein solches Mischungsverhältnis ist besonders gut zu kontrollieren und führt zu besonders homogener Vermischung. Dabei soll die jeweilige Kombination von Komponente **A-1** und Komponente **A-2** zusammen bevorzugt dasselbe Volumen aufweisen wie die Komponente **B.** Es können auch andere Mischverhältnisse eingestellt werden, beispielsweise **(A-1** + **A-2)** : **B** = 10 : 1, solange das resultierende NCO:OH-Verhältnis in der Mischung aller Komponenten im korrekten Bereich ist.

Das jeweilige Mischverhältnis von **A-1** und **A-2** kann beliebig variiert werden, solange die Gesamtmenge der Mischung konstant bleibt. Es ist möglich, nur die erste Komponente **A-1** mit der dritten Komponente **B** zu mischen, was eine besonders kurze Topfzeit zur Folge hat. Ebenso ist es möglich, nur die zweite Komponente **A-2** mit der dritten Komponente **B** zu mischen, was eine besonders lange Topfzeit zur Folge hat. Durch das Mischverhältnis der ersten Komponente **A-1** und der zweiten Komponente **A-2** kann jedoch eine beliebige Topfzeit innerhalb dieses Bereichs graduell und sehr exakt eingestellt werden. Die vorliegende Erfindung ermöglich es daher, die Topfzeit über den Klebeprozess dynamisch laufend anzupassen, allein durch das Mischverhältnis der Komponenten **A-1** und **A-2.** Somit sind Mehrschichtverklebungen zugänglich, die für jeden Klebeschicht eine individuelle Topfzeit ermöglichen, was die Effizienz des gesamten Prozesses drastisch erhöht.

In der vermischten Polyurethanzusammensetzung liegt in jeder Ausführungsform das Verhältnis zwischen der Anzahl Isocyanatgruppen und der Anzahl gegenüber Isocyanaten reaktiven Gruppen (NCO:OH-Verhältnis) vor der Aushärtung vorzugsweise ungefähr im Bereich von 1.2 bis 1, bevorzugt 1.15 bis 1.05. Es ist aber auch möglich, wenn auch meist nicht bevorzugt, dass ein unterstöchiometrischer Anteil an Isocyanatgruppen gegenüber Isocyanaten reaktiven Gruppen vorliegt.

Die Herstellung der drei Komponenten erfolgt getrennt voneinander und vorzugsweise unter Ausschluss von Feuchtigkeit. Die drei individuellen Komponenten werden typischerweise jeweils in einem eigenen Gebinde gelagert. Die weiteren, optionalen Bestandteile der Polyurethanzusammensetzung können als Bestandteil der ersten und/oder der zweiten und/oder der dritten Komponente vorhanden sein, wobei gegenüber Isocyanatgruppen reaktive weitere Bestandteile bevorzugt ein Bestandteil der ersten oder zweiten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind alle für sich lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die drei Komponenten werden vor dem Vermischen der Zusammensetzung getrennt voneinander gelagert und erst bei oder unmittelbar vor der Anwendung miteinander vermischt.

Die Reihenfolge der Vermischung ist nicht eingeschränkt. Es ist möglich, die Komponenten in beliebiger Reihenfolge zu mischen oder aus zwei der drei Komponenten eine Vormischung herzustellen, zu der dann die übrige Komponente hinzugemischt wird. Ebenso ist es möglich, eine Mischung durch simultanes Zuführen aller drei Komponenten gleichzeitig, z.B. in einen Statikmischer oder dynamischen Mischer, zu erreichen. Dabei können die einzelnen Komponenten am selben Ort des Mischers eingeführt werden, oder aber an verschiedenen Orten, damit eine Vorvermischung zweier Komponenten (beispielsweise **A-1** und **A-2)** stattfindet, bevor die übrige Komponente (beispielsweise Komponente **B)** eingemischt wird.

Das Mischen erfolgt typischerweise über Statikmischer oder mit Hilfe von dynamischen Mischern. Beim Mischen ist darauf zu achten, dass die drei Komponenten möglichst homogen vermischt werden. Werden die drei Komponenten unvollständig gemischt, treten lokale Abweichungen vom vorteilhaften Mischungsverhältnis auf, was sich in einer Verschlechterung der mechanischen oder anderen Eigenschaften auswirken kann.

Beim Kontakt der ersten beiden Komponenten **A-1** und **A-2** mit der dritten Komponente **B** beginnt nach Ablauf der Topfzeit die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet.

Die beschriebene dreikomponentige Polyurethanzusammensetzung ist vorteilhaft verwendbar als Laminierklebstoff, insbesondere für die Herstellung von Verbundelementen, insbesondere Mehrschichtholzplatten, oder für die Herstellung von Sandwichpanels, beispielsweise für den Fassadenbau.

Ein weiterer Gegenstand der Erfindung ist ein Verfahren zum schichtweisen Verkleben von mindestens drei Substraten, umfassend die Schritte in folgender Reihenfolge:
a) Bereitstellen der ersten Komponente **A-1** und der zweiten Komponente **A-2** und der dritten Komponente **B** wie vorgängig beschrieben, wobei jede der drei Komponenten über eine eigene Pumpe an eine Mischkammer angebunden ist und separat gefördert werden kann;
b) Fördern der benötigten Menge an erster Komponente **A-1,** zweiter Komponente **A-2** und dritter Komponente **B** zur Mischkammer und Vermischen der Komponenten durch einen statischen oder dynamischen Mischer, wobei das Mischverhältnis der Komponenten **A-1, A-2** und **B** über die Förderleistung der jeweiligen Pumpe gesteuert und vor dem Mischvorgang festgelegt und optional während dem Mischvorgang korrigiert wird;
c) Applizieren der vermischten Polyurethanzusammensetzung aus der Mischkammer auf die Oberfläche eines der zu verklebenden Substrate;
d) Fügen eines weiteren Substrates auf den applizierten Klebstoff;
e) Wiederholen der Schritte b) bis d), bis alle Substrate schichtweise über Klebstoff verbunden gefügt sind, wobei bei jedem nachfolgenden Klebevorgang ein höherer Anteil der ersten Komponenten **A-1** und ein geringer Anteil zweiten Komponenten **A-2** eingesetzt wird als im Klebevorgang davor;
e) optional Zusammenpressen der gefügten Substrate innerhalb der Topfzeit aller applizierter Klebstoffschichten, bis die Klebstoffschichten soweit ausgehärtet sind, dass die verklebten Substrate bewegt werden können.

Dabei können die beiden Substrate aus dem gleichen oder unterschiedlichen Materialien bestehen.

In diesen Verfahren zum Verkleben sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Schaumstoffe, Mineralwollmatten, Textilien oder andere Dämmaterialien;
- Holz, insbesondere Nadelholz, Buchenholz, Eichenholz, Ahornholz oder weitere Hölzer;
- Holz behandelt mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

Bevorzugte Substrate sind Holzplatten, und das Verfahren ist bevorzugt ein Verfahren zur Herstellung von mehrschichtigen Holzplatten, insbesondere Dreischichtplatten.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung, eines Aktivators oder eines Primers. Bei Holzsubstraten kann dies auch Schleifen, Aufrauen, Trocknen, Beizen, oder weitere Behandlungsarten von Hölzern umfassen.

Bevorzugt wird die erfindungsgemässe Zusammensetzung in gemischter Form vollflächig oder als Raupen auf einer Substratfläche aufgetragen, insbesondere mit einer Schichtdicke von zwischen 100 µm und 2.5 mm, im Falle von Raupen bevorzugt mit einer Dicke von 1 bis 5 mm, bevorzugt 2 bis 3 mm. Die Raupen werden über die bevorzugte Verpressung am Ende des Verfahrens zu einer vollflächigen dünnen Klebstoffschicht verpresst.

Der Auftrag erfolgt normalerweise über mehrere parallel angeordnete Düsen, beispielsweise 5 bis 30 Düsen, je nach Substratfläche.

In bevorzugten Ausführungsformen des erfindungsgemässen Verfahrens wird die Applikation der vermischten Polyurethanzusammensetzung vollständig automatisch mittels Roboter oder 3D-Drucker durchgeführt. Dabei werden die Auftragsdüsen mittels dieser Technik über die Substratfläche geführt und die gemischte Zusammensetzung darauf aufgetragen, indem ein mit den Auftragsdüsen ausgestatteter beweglicher Arm oder eine bewegliche Achse über die Substratfläche geführt wird. Durch die Geschwindigkeit des Düsenarms oder der Düsenachse und die Pumpgeschwindigkeit der gemischten Zusammensetzung durch die Düsen wird die Austragsmenge des Klebstoffs definiert.

Die Austragsmenge kann, je nach Anlage, beispielsweise zwischen wenigen 100 g und wenigen 1000 g Klebstoff pro Minute betragen.

Ausserdem ist bevorzugt steuerbar, ob der Auftrag mit geringerer Menge über 2 Fahrten (Auftrag leicht versetzt bei Hin und Rückfahrt) oder mit grösserer Menge bei 1 Fahrt des Applikationsarms stattfindet.

Bevorzugt misst die Dosieranlage die tatsächliche Auftragsmenge laufend über Druckmessungen vor und nach der Dosierpumpe.

Bevorzugt werden die Drehzahlen der Pumpen für die Zuführung der Komponenten **A-1, A-2** und **B** in die Mischkammer und die Drehzahl der Pumpe(n) für die Förderung der gemischten Zusammensetzung zu der Dosieranlage laufend gemessen und gespeichert oder zumindest angezeigt. So kann in bevorzugten Ausführungsformen der Steuercomputer Fehler erkennen und kompensieren, und eine Warnung kann gegeben werden, wenn die Pumpendrehzahl zu gering wird. Der minimale Wert üblicher Pumpendrehzahlen liegt ungefähr bei 10 Umdrehungen pro Minute (U/min), der maximale Wert kann beispielsweise bis 150 U/min betragen.

Eine geeignete Anlage oder Anordnung zur Durchführung des erfindungsgemässen Verfahrens umfasst separate Materialbehälter für die Komponenten **A-1, A-2** und **B,** eine separate Pumpe für jede Komponente, wobei die Pumpen so angeordnet sind, dass sie die Komponenten der herzustellenden Klebstoffzusammensetzung durch die Auslassleitungen zur Mischeinheit pumpen, einen beweglichen Arm oder eine bewegliche Achse, auf der die Auftragsdüsen angeordnet sind und eine Steuereinheit der Anlage, wobei die Steuereinheit:
- das Mischungsverhältnis der Klebstoffkomponenten, insbesondere der Komponenten **A-1** und **A-2** für jede Klebstoffschicht festlegt;
- die einzelnen Pumpen und ihre jeweilige Fördermenge steuert, um die Klebstoffkomponenten mit den komponentenspezifischen Pumpen in einem von der Steuereinheit bestimmten Mischungsverhältnis zur Mischeinheit zu pumpen, wobei die Steuereinheit dazu eingerichtet ist, das Verhältnis der Komponenten **A-1** und **A-2** des auf ein Substrat zu verabreichenden Klebstoffs in während der Applikation so zu steuern, dass die Topfzeit des applizierten Klebstoffs in jeder später aufgebrachten Klebeschicht im Vergleich zur vorherigen verkürzt ist;
- die Bewegung des Applikationsarms und Applikationsgeschwindigkeit der vermischten Polyurethanzusammensetzung steuert.

Eine geeignete solche Anlage ist beispielsweise offenbart in WO 2018/134476 A1, insbesondere auf S. 6, Z. 8 bis S. 8, Z. 24 und Figur 2.

Bevorzugt wird das erfindungsgemässe Verfahren über eine Steuereinheit umfassend einen Computer gesteuert, der alle Aspekte des Verfahrens überwacht und steuert, insbesondere mindestens die Pumpgeschwindigkeiten der einzelnen Komponenten und des gemischten Klebstoffs sowie die Auftragsgeschwindigkeit des Klebstoffs auf das Substrat.

Die Steuereinheit kann so ausgestaltet sein, dass sie bestimmte Parameter wie die Pumpdrehzahl auf einem angeschlossenen Bildschirm anzeigt oder an Anzeigegeräte sendet, so dass ein Anwender diese überwachen und über eine Steueranlage gegebenenfalls beeinflussen kann.

Die Steuereinheit kann auch so ausgestaltet sein, dass ein Computer diese Vorgänge vollautomatisch überwacht und steuert, so dass keine Anwenderinteraktion während des Klebeverfahrens zwingend notwendig ist.

In bevorzugten Ausführungsformen des Verfahrens, bei dem ein Computer mindestens teilweise die Steuerung der Verfahrensparameter durchführt, insbesondere die Drehzahl der Pumpen und die Bewegung der Applikationsvorrichtung, beispielsweise des Arms oder der Achse mit den Düsen, wird ein Computerprogramm oder elektronisch gespeicherter Algorithmus benötigt, um den Computer entsprechend zu programmieren.

Ein entsprechendes Computerprogramm umfasst bevorzugt entsprechende Computercodes, welche das gegenseitige Mischungsverhältnis der Komponenten **A-1, A-2** und **B** zum Zeitpunkt des Beginns des Verfahrens für jede Klebstoffschicht berechnen und die Steuereinheit der Anlage entsprechend programmieren, damit das Verfahren entsprechend durchgeführt wird.

Über die Steuereinheit der Anlage, welche bevorzugt einen Computer umfasst, kann das optimale Startmischungsverhältnis der verschiedenen Komponenten, insbesondere der Komponenten **A-1** und **A-2** zum Startzeitpunkt des Klebstoffauftrags bestimmt und eingestellt werden, bevorzugt in Abhängigkeit von der aktuellen Umgebungstemperatur und/oder der Temperatur der Komponenten **A-1, A-2** und/oder **B** und/oder der Temperatur der gemischten Klebstoffzusammensetzung und/oder der Temperatur der für die Verklebung der Substrate genutzten Produktionsfläche und/oder der Temperatur der Substrate selbst.

Weiterhin können zur Bestimmung des Mischungsverhältnisses der Komponenten **A-1** und **A-2** zu Beginn und während des Verfahrens vorzugsweise die experimentell insbesondere bei verschiedenen Temperaturen gemessenen Reaktionsgeschwindigkeitskurven, wie weiter unten im experimentellen Teil dieser Schrift beschrieben, zur Berechnung Mischungsverhältnis der verschiedenen Komponenten herangezogen werden. Diese Daten sind bevorzugt in einer Datenbank gespeichert und dem Anwender oder dem Computerprogramm zugänglich.

Diese Berechnung kann vor dem Beginn des Verfahrens geschehen, beispielsweise mittels Programmierung der Steuereinheit durch einen Anwender oder ein Computerprogramm, oder während des Verfahrens selbst neu berechnet werden, falls Fehler entdeckt oder Parameterschwankungen, beispielsweise Temperaturschwankungen, gemessen werden.

Im fortschreitendenden Verfahren steuert die Steuereinheit vorzugsweise kontinuierlich und stufenlos den vorzugsweise bekannten Reaktionsgeschwindigkeitsverlauf anhand des Mischungsverhältnisses der verschiedenen Komponenten des herzustellenden Klebstoffs so, dass gegen Ende des Verfahrens der Anteil der Komponente **A-1** im Klebstoffgemisch erhöht wird.

In allen Fällen ist die Zuführung der beiden Komponenten **A-1** und **A-2** so zu steuern, dass die Gesamtmenge dieser beiden Komponenten im Klebstoffgemisch konstant ist, damit das NCO:OH Verhältnis, bestimmt durch das Verhältnis der Summe der Komponenten **A-1** und **A-2** zu der Komponente **B** immer gleich bleibt. Beispielsweise kann zu Beginn des Verfahrens für die erste Klebstoffschicht ein Klebstoffgemisch mit 90% Komponente **A-2** und 10% Komponente **A-1** und 100% Komponente **B** eingesetzt werden, und bei der zweiten Klebstoffschicht ein Klebstoffgemisch mit 50% Komponente **A-2** und 50% Komponente **A-1** und 100% Komponente **B.**

Die Anlage ist bevorzugt mit insbesondere mehreren Temperatursensoren ausgestattet. Diese Sensoren messen die aktuelle Umgebungstemperatur und/oder die Temperatur der Komponenten **A-1, A-2** und/oder **B** und/oder der gemischten Klebstoffzusammensetzung und/oder die Temperatur für die Verklebung der Substrate genutzten Produktionsfläche und/oder die Temperatur der Substrate selbst.

Die Anlage ist in denselben oder anderen Ausführungsformen bevorzugt mit weiteren Sensoren ausgestattet, beispielsweise Feuchtigkeitssensoren, die beispielsweise die Luftfeuchtigkeit oder die Substratfeuchtigkeit messen, sowie Druck- und/oder Durchflusssensoren, die die Leistung der Pumpen überwachen.

Alle Daten, die so ermittelt werden, können als Parameter auf Monitoren oder Kontrollanzeigen angezeigt werden oder direkt in einen Computer der Steuereinheit eingespiesen werden. Damit besteht die Möglichkeit, bei Bedarf händisch oder automatisch korrigierend in das Verfahren einzugreifen, falls einer oder mehrere dieser Parameter Einfluss auf die eingestellte Topfzeit haben. Eine Korrektur umfasst insbesondere das dynamische Anpassen des Mischverhältnisses der Komponenten **A-1** und **A-2.**

In besonders bevorzugten Ausführungsformend des erfindungsgemässen Verfahrens wird das Mischverhältnis der Komponenten **A-1, A-2** und **B** für jede Klebstoffschicht vorab berechnet, wobei die Umgebungstemperatur während der Durchführung des Verfahrens bei der Berechnung des Mischverhältnisses berücksichtigt wird.

In denselben oder anderen besonders bevorzugten Ausführungsformen des erfindungsgemässen Verfahrens wird das Mischverhältnis der Komponenten **A-1, A-2** und **B** für jede Klebstoffschicht während des Verfahrens mittels eines Computers berechnet und bei Bedarf angepasst, wobei über mindestens einen Sensor während des Verfahrens Parameter gemessen werden, die in den Computer eingelesen werden und die einen Einfluss auf die Berechnung des Mischverhältnisses haben.

Insbesondere sind diese Parameter ausgewählt aus Umgebungstemperatur, Luftfeuchtigkeit, Temperatur der Komponenten **A-1, A-2** und/oder **B** oder der gemischten Zusammensetzung, Substrattemperatur, sowie Substratfeuchtigkeit.

Am Ende des erfindungsgemässen Verfahrens, wenn alle Substrate schichtweise mit den Klebstoffschichten verfugt sind, wird der erhaltene Artikel bevorzugt verpresst. Durch die Verpressung wird der noch nicht ausgehärtete Klebstoff schlüssig mit den Substraten verbunden und die Stabilität des verklebten Artikels erhöht. Eine Verpressung ist nicht in jedem Fall nötig, beispielsweise bei Substraten mit hohem Eigengewicht, aber sie ist bevorzugt, insbesondere bei Substraten mit porösen und nicht perfekt ebenen Oberflächen wie Holz.

Es ist wichtig, dass die Verpressung der gefügten Substrate innerhalb der Topfzeit aller applizierter Klebstoffschichten beginnt.

Der Pressvorgang sollte deutlich länger dauern, als die Topfzeit der zuletzt aufgetragenen Klebstoffmassen am Ende des letzten Schichtauftrags, um eine genügende Aushärtung während der Verpressung zu gewährleisten. Bevorzugt dauert die Presszeit doppelt so lange wie Topfzeit des zuletzt aufgetragenen Klebstoffs in der letzten Klebstoffschicht. Damit kann eine genügende Aushärtung in jedem Fall gewährleistet werden.

Aus dem beschriebenen Verfahren zum Verkleben entsteht ein Artikel, bei welchem die ausgehärtete Klebstoffzusammensetzung mindestens drei Substrate über mindestens zwei Klebeschichten miteinander verbindet. Dieser Artikel ist insbesondere ein Sandwichelement einer Leichtbaustruktur, ein industrielles Gut oder ein Konsumgut, insbesondere eine Verbundplatte, ein Sandwichelement oder ein Mehrschichtelement, welches für Bauten oder industrielle Fertigung eingesetzt werden kann, insbesondere Dämmplatten für den Fassadenbau und ganz besonders bevorzugt Schichtholzplatten, insbesondere Dreischichtplatten.

Ein weiterer Aspekt der Erfindung ist die Verwendung einer dreikomponentigen Polyurethanzusammensetzung wie vorgängig beschreiben als Laminierklebstoff für das Verkleben von mindestens drei Substraten. Bevorzugt ist die Verwendung zur Herstellung von Verbundplatten sowie Sandwichelementen, insbesondere Dämmplatten für den Fassadenbau und ganz besonders bevorzugt Schichtholzplatten, insbesondere Dreischichtplatten.

### Beispiele

### Verwendete Substanzen:

In der folgenden Tabelle 1 sind die Substanzen aufgelistet, die in den Beispielzusammensetzungen eingesetzt wurden. Die Rohstoffe wurden ohne weitere Behandlung wie erworben eingesetzt.

| | |
|---|---|
| Voranol CP 4755 | Voranol^{®} CP 4755 (Dow Chemical); Polyethertriol; Mw: 5000 g/mol; OH-Zahl: 35 mg KOH/g (Polyol **P**) |
| Voranol CP 450 | Voranol^{®} CP 450 (Dow Chemical); Polyethertriol; Mw: 439 g/mol; OH-Zahl: 383 mg KOH/g (Polyol **P**) |
| Whitetex | Satintone^{®} W (Whitetex) (BASF); calciniertes Kaolin (Füllstoff) |
| 1,5-Pentandiol | (Sigma Aldrich) |
| Thiocure 320 | (Thiocure^{®} 320 (Bruno Bock); Ethylen-bis(3-mercaptopropionat) (Verbindung **T**) |
| IOTG | Evabopol 198D (Bruno Bock); Isooctylthioglycolat (Verbindung **T**) |
| Suprasec 2030 | Spurasec^{®} 2030 (Huntsman); Gemisch von Diphenylmethan-4,4'-diisocyanat (MDI) mit Isomeren und höherfunktionellen Homologen (PMDI). NCO-Gehalt: 28.6 Gew.-%, durchschnittliche NCO-Funktionalität: 2.3 (Polyisocyanat **I**) |
| DIDP | Diisodecylphthalat (Weichmacher) |
| Prepolymer 1 | Isocyanatgruppen-haltiges Polyurethanpolymer; Synthese siehe unten (Polyisocyanat **I**) |
| HDK H18 | HDK^{®}H18 (Wacker); hydrophobe pyrogene Kieselsäure (Füllstoff) |
| Sylosiv A 3 | Sylosiv^{®} A 3 (Grace); micronisiertes, poröses, kristallines Aluminosilicat (Molsieb) mit Porenöffnungen von ca. 3 Å (Trockungsmittel) |
| Silquest | Silquest^{®} Y-15866 (Momentive); Vinyl-funktionelles Organoalkoxysilan (Trocknungsmittel) |
| Coscat 83 | Coscat^{®} 83 (Vertellus Specialties Inc.); Organobismut-Katalysator für Polyurethanzusammensetzungen; 6.46 mmol Bi/g (Metallkatalysator **K)** |

| | |
|---|---|
| **Tabelle 1:** Verwendete Substanzen | |

### Synthese von Prepolymer 1

1'300 g Polyoxypropylen-Diol (Acclaim^{®} 4200, von Covestro AG; OH-Zahl 28 mg KOH/g), 2'600 g Ethylenoxid-terminiertes Polyoxypropylen-Triol (Voranol^{®} CP 4755, von DowDuPont Inc.; OH-Zahl 35 mg KOH/g), 600 g 4,4'-Diphenylmethandiisocyanat (Desmodur^{®} 44 MC L, von Covestro AG) und 500 g Diisodecylphthalat wurden nach bekanntem Verfahren bei 80 °C zu einem bei Raumtemperatur flüssigen, NCO-terminierten Polymer mit einem Isocyanatgruppen-Gehalt von 2.05 Gewichts-% umgesetzt.

### Herstellung von Komponenten der Polyurethanzusammensetzung

Für jede Komponenten-Zusammensetzung wurden die in den Tabellen 2 bis 4 angegebenen Inhaltsstoffe in den angegebenen Mengen (in Gewichtsteilen oder Gew.-%) der ersten Komponente **A-1** (Tabelle 2) mittels eines Vakuumdissolvers unter Feuchtigkeitsausschluss zu einer homogenen Paste verarbeitet und luftdicht verschlossen aufbewahrt. Ebenso wurden die in den Tabellen 3 und 4 angegebenen Inhaltsstoffe der zweiten Komponente **A-2** (Tabelle 3) und der dritten Komponente **B** (Tabelle 4) verarbeitet und aufbewahrt.

**Tabelle 2: Zusammensetzung Komponente A-1**

| **Komponente A-1** | Menge (Gewichts-%, bezogen auf Komponente **A-1)** |
|---|---|
| Voranol CP 4755 | 45.55 |
| Voranol CP 450 | 10.0 |
| Whitetex | 26.2 |
| HDK H18 | 3.0 |
| 1,5-Pentandiol | 13.35 |
| Thiocure 320 | 0.3 |
| IOTG | 0.8 |
| Coscat 83 | 0.8 |

**Tabelle 3: Zusammensetzung Komponente A-2**

| **Komponente A-2** | Menge (Gewichts-%, bezogen auf Komponente **A-2)** |
|---|---|
| Voranol CP 4755 | 45.75 |
| Voranol CP 450 | 10.0 |
| Whitetex | 26.2 |
| HDK H18 | 2.9 |
| 1,5-Pentandiol | 12.75 |
| Thiocure 320 | 1.9 |
| IOTG | 0.2 |
| Coscat 83 | 0.3 |

**Tabelle 4: Zusammensetzung Komponente B**

| **Komponente B** | Menge (Gewichts-%, bezogen auf Komponente **B)** |
|---|---|
| Suprasec 2030 | 35.0 |
| Prepolymer 1 | 10.0 |
| DIDP | 5.0 |
| Silquest | 0.95 |
| Sylosiv A 3 | 5.0 |
| Whitetex | 20.0 |
| HDK H18 | 1.75 |
| Suprasec 2030 | 22.3 |

### Messung der Topfzeiten

Für eine Reihe von erfindungsgemässen dreikomponentigen Polyurethanzusammensetzungen wurde die Topfzeit bei verschiedenen Temperaturen gemessen. In allen Beispielen wurde eine 1:1 Mischung (bezogen auf Volumen) der Komponente **A** (Komponente **A-1** plus Komponente **A-2** vorgemischt) zu Komponente **B** verwendet.

Die **Topfzeit** wurde mit einem Rheometer gemessen als Zeit, bis die komplexe Viskosität nach Mischen der beiden Komponenten 1000 Pa s betrug. Die Messung der komplexen Viskosität erfolgte auf einem thermostatisierten Platten-Platten Rheometer MCR 302 (Firma Anton Paar) mit einem Plattendurchmesser von 25 mm und einem Plattenabstand von 1 mm bei einer Kreisfrequenz von 6 rad s⁻¹(0.95 Hz) und einer definierten Temperatur (15°C, 20°C oder 30°C, jeweils 50% relative Luftfeuchtigkeit). Die Deformation betrug 0.2%. Dazu wurden die zu messenden Zusammensetzungen in eine Doppelkartuschenpistole eingesetzt, wobei eine Kartusche die Komponente **B** enthielt und die andere Kartusche die Komponente **A** (Komponente **A-1** oder Komponente **A-2,** bzw. die im jeweiligen Versuch definierten Mischungen davon). Die jeweiligen Komponenten wurden vor der Messung in den jeweiligen Kartuschen während 24 Stunden auf die jeweilige Messtemperatur temperiert. Die zu messende Mischung wurde aus der Pistole über einen aufgesetzten Statikmischer vermischt und direkt auf die Platte des Rheometers appliziert, und sofort nach Applikation wurde die Viskositätsmessung durchgeführt.

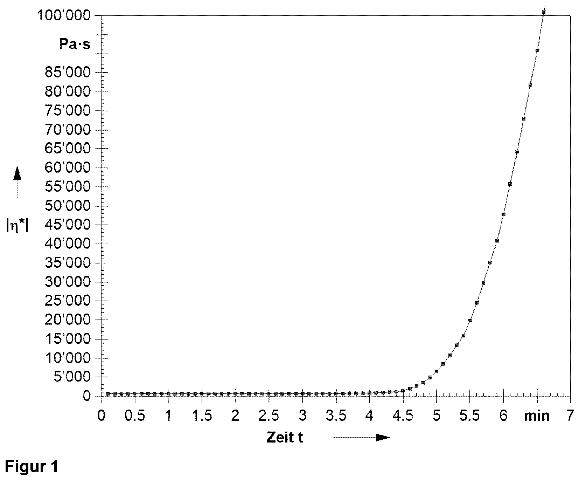

Figur 1 zeigt die Messung des Versuchs V-4 (siehe Tabelle 5) mit 50% Komponente **A-1** und 50% Komponente **A-2** (Volumen-%) bei 20°C. Es ist deutlich ersichtlich, dass die komplexe Viskosität lange konstant sehr niedrig ist, aber bei 4.3 Minuten plötzlich rasch anzusteigen beginnt. Diese Zeit (definiert über das Erreichen von 1000 Pa s) bezeichnet das Ende der Topfzeit und der Beginn der sehr raschen Aushärtungsreaktion.

Die nachfolgende Tabelle 5 zeigt die Versuche V-1 bis V-5, welche Messungen zur Topfzeit mit verschiedenen Anteilen (volumetrisch) an Komponente **A-1,** bzw. Komponente **A-2** bei den verschiedenen Temperaturen darstellen. Das Mischverhältnis der Komponente **A** (jeweils entweder reine Komponente **A-1,** bzw. **A-2** oder die angegebene Mischung davon) zu Komponente **B** war immer 1:1 (volumetrisch).

**Tabelle 5: Messung der Topfzeiten verschiedener erfindungsgemässer Zusammensetzungen (Versuche V-1 bis V-5)**

| **Versuch** | Anteil Komponente **A-1** | Anteil Komponente **A-2** | Topfzeit bei 15 °C [min] | Topfzeit bei 20 °C [min] | Topfzeit bei 30 °C [min] |
|---|---|---|---|---|---|
| **V-1** | 100% | 0% | 1.10 | 1.00 | 0.50 |
| **V-2** | 75% | 25% | 2.50 | 1.90 | 1.20 |
| **V-3** | 65% | 35% | 3.80 | 2.70 | 1.60 |
| **V-4** | 50% | 50% | 6.10 | 4.30 | 2.50 |
| **V-5** | 25% | 75% | 12.30 | 8.60 | 4.70 |
| **V-6** | 0% | 100% | 20.90 | 15.20 | 7.50 |

Für ein industrielles Verfahren der mehrschichtigen Verklebung sind Topfzeiten zwischen 1.5 min und 9 min ideal, wobei die längste Topfzeit für die erste Klebeschicht und die kürzeste Topfzeit für die letzte Klebeschicht einzustellen sind. Beispielsweise ist es bei einer Verklebung von drei Substratschichten mit zwei Klebstoffschichten aus Effizienzgründen empfehlenswert, wenn die zweite Klebstoffschicht eine ungefähr halb so lange Topfzeit aufweist wie die erste.

Die Daten aus Tabelle 5 zeigen, dass bei jeder üblichen Temperatur in einer Fertigungshalle alleine über das Verhältnis der Komponenten **A-1** und **A-2** eine für jede Klebeschicht ideale Topfzeit eingestellt werden kann. Dies kann sogar während des Prozesses angepasst werden, sollte eine signifikante Temperaturschwankung auftreten.

### Verfahren zum Verkleben von Substraten

Im Folgenden wird die Durchführung eines erfindungsgemässen Verfahrens auf einer handelsüblichen Dreikomponentenanlage zur Verklebung von Dreischichtholzplatten beschrieben.

Die Verklebung wurde bei 20°C durchgeführt.

Als Substrate wurden Nadelholzplatten verwendet, wobei Substrate 1 bis 3 im Versuch identisch waren.

Als Klebstoffe wurden im ersten Klebeschritt Zusammensetzung V-4 (siehe Tabelle 5) und im zweiten Klebeschritt Zusammensetzung V-2 (siehe Tabelle 5) verwendet.

Die einzelnen Schritte des Verfahrens sind in Tabelle 6 dargestellt, umfassend den Zeitbedarf jedes einzelnen Schrittes und der total abgelaufenen Zeit nach jedem Schritt. Wichtig ist, dass zu Beginn der Verpressung die Topfzeit aller Klebstoffschichten noch nicht abgelaufen ist. Die jeweilige Topfzeit beginnt direkt nach dem Mischen (beim Beginn des Auftrags) des jeweiligen Klebstoffs, also nach 0.9 min für Klebeschicht 1 und nach 2.4 min für Klebeschicht 2.

**Tabelle 6: Erfindungsgemässes Verfahren mit zwei Klebstoffen (V-4 und V-2) bei 20°C. * Topfzeit (20°C) = 4.3 min; ** Topfzeit (20°C) = 1.9 min**

| **Schritt** | Zeitbedarf [min] | Abgelaufene Zeit nach Ende Schritt [min] |
|---|---|---|
| Auflegen Substrat 1 | 0.9 | 0.9 |
| Applikation Klebeschicht 1 (V-4*) | 0.6 | 1.5 |
| Auflegen Substrat 2 | 0.9 | 2.4 |
| Applikation Klebeschicht 2 (V-2**) | 0.6 | 3.0 |
| Auflegen Substrat 3 | 0.9 | 3.9 |
| Transfer Presse | 0.2 | 4.1 |
| Verpressung | 5.8 | 9.9 |
| TOTAL | 9.9 | |

Der Pressvorgang sollte für jede Klebstoffmasse mindestens so lange dauern wie die Topfzeit der jeweiligen Klebstoffmischung beträgt und dazu, falls noch nicht abgelaufen, die verbleibende Topfzeit der applizierten Klebstoffschichten. In diesem Fall wurde als Presszeit die Topfzeit der zuerst aufgetragenen Klebstoffschicht am Ende des Schichtauftrags und die verbleibende Topfzeit dieser Klebstoffmasse als Verpresszeit eingesetzt, was eine genügend stabile Verklebung gewährleistet.

Zum Vergleich wurde ein nicht erfindungsgemässes Verfahren durchgeführt, das für beide Klebeschichten dasselbe Mischverhältnis in Komponente **A** (also der Mischung aus **A-1** und **A-2)** aufwies. Dies simuliert eine zweikomponentige Polyurethanzusammensetzung des Standes der Technik, beziehungsweise ein Verfahren wie in WO 2023/031304 A1 offenbart.

Dieses Verfahren wurde auf derselben Anlage mit denselben Substraten bei derselben Temperatur durchgeführt. Die Verfahrensschritte sind in Tabelle 7 dargestellt.

**Tabelle 7: Nicht erfindungsgemässes Verfahren mit einem Klebstoff (V-4) bei 20°C. * Topfzeit (20°C) = 4.3 min**

| **Schritt** | **Zeitbedarf [min]** | **Abgelaufene Zeit nach Ende Schritt [min]** |
|---|---|---|
| Auflegen Substrat 1 | 0.9 | 0.9 |
| Applikation Klebeschicht 1 (V-4*) | 0.6 | 1.5 |
| Auflegen Substrat 2 | 0.9 | 2.4 |
| Applikation Klebeschicht 2 (V-4*) | 0.6 | 3.0 |
| Auflegen Substrat 3 | 0.9 | 3.9 |
| Transfer Presse | 0.2 | 4.1 |
| Verpressung | 7.4 | 11.5 |
| TOTAL | 11.5 | |

Die Daten aus Tabellen 6 und 7 zeigen, dass das erfindungsgemässe Verfahren viel höhere Taktzeiten ermöglicht. Weiterhin ermöglicht es, während des Verfahrens auf sich ändernde Bedingungen zu reagieren, beispielsweise sich ändernde Temperaturen. Die gewünschte Topfzeit kann in solchen Fällen einfach durch dynamisches Verändern des Verhältnisses von **A-1** und **A-2** eingestellt werden. Dabei bleibt das NCO:OH-Verhältnis in der Zusammensetzung stets konstant, was eine saubere Aushärtung gewährleistet.

## Patentansprüche

1. Dreikomponentige Polyurethanzusammensetzung geeignet als Laminierklebstoff, bestehend aus drei bei der Anwendung zu mischenden Komponenten **A-1, A-2** und **B;** wobei
- die erste Komponente **A-1** und die zweite Komponente **A-2** jeweils
- mindestens ein Polyol **P** mit einer OH-Funktionalität im Bereich von 1.5 bis 4 und einem mittleren Molekulargewicht (Zahlenmittel) Mₙ im Bereich von 250 bis 15'000 g/mol, sowie
- mindestens einen Metallkatalysator **K** für die Reaktion von Hydroxylgruppen und Isocyanatgruppen, der Thiokomplexe bilden kann, sowie
- mindestens eine Verbindung **T,** die mindestens eine Thiolgruppe aufweist, umfassen;
wobei das molare Verhältnis aller Thiolgruppen der mindestens einen Verbindung **T** zu allen Metallatomen des mindestens einen Metallkatalysators **K** in der ersten Komponente **A-1** und in der zweiten Komponente **A-2** jeweils zwischen 1:1 und 250:1 liegt; und
- die dritte Komponente **B**
- mindestens ein Polyisocyanat **I** umfasst;
**dadurch gekennzeichnet, dass**
die erste Komponente **A-1** mindestens die 1.5-fache Menge an Metallkatalysator **K** enthält wie in der zweiten Komponente **A-2** enthalten ist, bezogen auf die molare Menge an Metallatomen des Metallkatalysators **K** in der jeweiligen Komponente.

2. Dreikomponentige Polyurethanzusammensetzung gemäss Anspruch 1, **dadurch gekennzeichnet, dass** der Metallkatalysator **K** eine Zinn(IV)-Verbindung, eine Zinn(II)-Verbindung, und/oder eine Bismut(III)-Verbindung umfasst.

3. Dreikomponentige Polyurethanzusammensetzung gemäss Anspruch 1 oder 2, **dadurch gekennzeichnet, dass** das molare Verhältnis aller Thiolgruppen der mindestens einen Verbindung **T** zu allen Metallatomen des mindestens einen Metallkatalysators **K** in der zweiten Komponente **A-2** höher ist als in der ersten Komponente **A-1.**

4. Dreikomponentige Polyurethanzusammensetzung gemäss einem der vorhergehenden Ansprüche, **dadurch gekennzeichnet, dass** die mindestens eine Verbindung **T** eine Polythiolverbindung mit 1 bis 6 Thiolgruppen oder eine Mischung solcher Verbindungen umfasst.

5. Dreikomponentige Polyurethanzusammensetzung gemäss Anspruch 4, **dadurch gekennzeichnet, dass** die mindestens eine Verbindung **T** ausgewählt ist aus der Gruppe bestehend aus Ethylenglykol-di(3-mercaptopropionat), Ethylenglykol-dimercaptoacetat, Dipentaerythritolhexa(3-mercaptopropionat), Trimethylolpropan-tri(3-mercaptopropionat), Alkylmercaptoacetaten, 3-Mercaptopropyltrialkoxysilanen, sowie Thiol-funktionellen Siloxan-Oligomeren.

6. Dreikomponentige Polyurethanzusammensetzung gemäss einem der vorhergehenden Ansprüche, **dadurch gekennzeichnet, dass** die zweite Komponente **A-2** mindestens doppelt so viel Verbindung **T** enthält wie die erste Komponente **A-1,** bezogen auf die molare Menge an Thiolgruppen der Verbindung **T** in der jeweiligen Komponente.

7. Dreikomponentige Polyurethanzusammensetzung gemäss einem der vorhergehenden Ansprüche, **dadurch gekennzeichnet, dass** das Polyol **P** mindestens ein Polyethertriol umfasst.

8. Dreikomponentige Polyurethanzusammensetzung gemäss einem der vorhergehenden Ansprüche, **dadurch gekennzeichnet, dass** das Polyisocyanat I eine bei Raumtemperatur flüssige Form von 4,4`-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, umfasst.

9. Dreikomponentige Polyurethanzusammensetzung gemäss einem der vorgehenden Ansprüche, **dadurch gekennzeichnet, dass** die dritte Komponente **B** ein Isocyanatgruppen-haltiges Polyurethanpolymer enthält.

10. Dreikomponentige Polyurethanzusammensetzung gemäss einem der vorgehenden Ansprüche, **dadurch gekennzeichnet, dass** wenigstens die dritte Komponente **B** mindestens ein Trockungsmittel enthält, bevorzugt ebenfalls mindestens eine der Komponente **A-1** und **A-2.**

11. Verfahren zum schichtweisen Verkleben von mindestens drei Substraten, umfassend die Schritte in folgender Reihenfolge:
a) Bereitstellen der ersten Komponente **A-1** und der zweiten Komponente **A-2** und der dritten Komponente **B** gemäss einem der Ansprüche 1 bis 10, wobei jede der drei Komponenten über eine eigene Pumpe an eine Mischkammer angebunden ist und separat gefördert werden kann;
b) Fördern der benötigten Menge an erster Komponente **A-1,** zweiter Komponente **A-2** und dritter Komponente **B** zur Mischkammer und Vermischen der Komponenten durch einen statischen oder dynamischen Mischer, wobei das Mischverhältnis der Komponenten **A-1, A-2** und **B** über die Förderleistung der jeweiligen Pumpe gesteuert und vor dem Mischvorgang festgelegt und optional während dem Mischvorgang korrigiert wird;
c) Applizieren der vermischten Polyurethanzusammensetzung aus der Mischkammer auf die Oberfläche eines der zu verklebenden Substrate;
d) Fügen eines weiteren Substrates auf den applizierten Klebstoff;
e) Wiederholen der Schritte b) bis d), bis alle Substrate schichtweise über Klebstoff verbunden gefügt sind, wobei bei jedem nachfolgenden Klebevorgang ein höherer Anteil der ersten Komponenten **A-1** und ein geringer Anteil zweiten Komponenten **A-2** eingesetzt wird als im Klebevorgang davor;
f) optional Zusammenpressen der gefügten Substrate innerhalb der Topfzeit aller applizierter Klebstoffschichten, bis die Klebstoffschichten soweit ausgehärtet sind, dass die verklebten Substrate bewegt werden können.

12. Verfahren gemäss Anspruch 11, **dadurch gekennzeichnet, dass** die Applikation der vermischten Polyurethanzusammensetzung vollständig automatisch mittels Roboter oder 3D-Drucker durchgeführt wird.

13. Verfahren gemäss einem der Ansprüche 11 oder 12, **dadurch gekennzeichnet, dass** das Mischverhältnis der Komponenten **A-1, A-2** und B für jede Klebstoffschicht vorab berechnet wird, wobei die Umgebungstemperatur während der Durchführung des Verfahrens bei der Berechnung des Mischverhältnisses berücksichtigt wird.

14. Verfahren gemäss einem der Ansprüche 11 bis 13, **dadurch gekennzeichnet, dass** das Mischverhältnis der Komponenten **A-1, A-2** und **B** für jede Klebstoffschicht während des Verfahrens mittels eines Computers berechnet und bei Bedarf angepasst wird, wobei über mindestens einen Sensor während des Verfahrens Parameter gemessen werden, die in den Computer eingelesen werden und die einen Einfluss auf die Berechnung des Mischverhältnisses haben.

15. Verfahren gemäss Anspruch 14, **dadurch gekennzeichnet, dass** die Parameter ausgewählt sind aus Umgebungstemperatur, Luftfeuchtigkeit, Temperatur der Komponenten **A-1, A-2** und/oder **B** oder der gemischten Zusammensetzung, Substrattemperatur, sowie Substratfeuchtigkeit.

16. Verfahren gemäss einem der Ansprüche 11 bis 15, **dadurch gekennzeichnet, dass** die Substrate Holzplatten sind.
